# EUROPÄISCHE PATENTSCHRIFT

(11) **EP 1 306 927 B1**
(45) Veröffentlichungstag und Bekanntmachung des Hinweises auf die Patenterteilung: **05.10.2005**
(21) Anmeldenummer: 02018816.5
(22) Anmeldetag: 23.08.2002
(51) Int. Cl.: H01R 11/28, B60K 28/14, H01M 2/34, H01M 2/20, H01H 83/20

(54) **Elektrischer Akkumulator**
Electrical accumulator
Accumulateur électrique

(30) Priorität: 19.10.2001 DE 10152701
(43) Veröffentlichungstag der Anmeldung: 02.05.2003
(73) Patentinhaber: VB Autobatterie GmbH & Co. KGaA, 30419 Hannover (DE)
(72) Erfinder: Streuer, Peter, 30559 Hannover (DE); Rosenkranz, Christian, Dr., 31515 Wunstorf (DE); Richter, Gerolf, Dr., 31139 Hildesheim (DE)
(74) Vertreter: Lins, Edgar

(56) Entgegenhaltungen:
- EP-A- 0 402 635
- WO-A-99/65047
- US-A- 5 488 338
- US-A- 6 049 265
- PATENT ABSTRACTS OF JAPAN vol. 2000, no. 24, 11. Mai 2001 (2001-05-11) & JP 2001 185124 A (ALPS ELECTRIC CO LTD;SANYO ELECTRIC CO LTD), 6. Juli 2001 (2001-07-06)

## Beschreibung

Die Erfindung betrifft einen elektrischen Akkumulator mit in einem Gehäuse angeordneten positiven und negativen Elektroden mit zwischenliegenden Separatoren, einem Elektrolyten und mit mindestens einem Endpol und daran angeschlossenem Kabel. Bevorzugt anwendbar ist die Erfindung bei Starterbatterien für Kraftfahrzeuge.

Kabelanschlüsse mit Batterietrennschaltern für elektrische Akkumulatoren, insbesondere für Starterbatterien, sind in verschiedenen Ausführungsformen als Schutzschalter bekannt. Die Batterie wird beim Auftreten von Störungszuständen, beispielsweise bei einem Unfall oder einem Kurzschluss, stromlos geschaltet.

Aus der Druckschrift DE 23 19 412 ist eine Akkumulatorenbatterie bekannt die mit einer in die Batterie fest eingebauten Schaltvorrichtung versehen ist, die eine an die Batterie angeschlossene Leitung bei einer plötzlichen Änderung der Fahrgeschwindigkeit unterbricht und solange unterbrochen hält, bis sie durch Einwirkung von außen wieder in die Schließstellung überführt wird.

Die Dokumente DE 198 25 245 C1 (=WO 99/65047 A1), US 6,049,265 und DE 198 25 246 C1 beschreiben einen Batterie-Hauptschalter, insbesondere für Kraftfahrzeuge, der ein auf den Pluspol der Batterie aufsetzbares Schaltergehäuse und eine innerhalb des Gehäuses an dem Pluspol festklemmbare Polklemme aufweist. Der Hauptschalter dient als Transitschalter, Stilllegungsschalter, um bei längerem Stillstand des Fahrzeugs die Batterie vom Bordnetz abzutrennen, oder Störungsschalter, der beispielsweise durch einen Kurzschlusssensor oder einen Crashsensor das Generator/ Anlasser-Kabel von der Batterie abtrennt, während das Bordnetz im Betrieb bleibt.

Bei diesen bekannten Batterietrennschaltern ist nicht gewährleistet, dass der Strom vor dem Lösen der Kabelverbindungen des Akkumulators unterbrochen wird. Vor und während der Montage derartiger elektrischer Akkumulatoren ist kein ausreichender Berührungsschutz vorhanden, der insbesondere bei höheren Betriebsspannungen von Bedeutung ist.

Aufgabe der Erfindung ist es, einen Akkumulator anzugeben, bei dem das Lösen einer stromdurchflossenen Verbindung zwischen Akkumulator und einem elektrischen Versorgungsnetz verhindert wird, solange eine Last anliegt.

Diese Aufgabe wird erfindungsgemäß bei einem elektrischen Akkumulator der eingangs genannten Gattung durch die kennzeichnenden Merkmale des Anspruchs 1 gelöst. In den Unteransprüchen sind vorteilhafte Ausgestaltungen der Erfindung angegeben.

Aufbau und Funktionsweise werden im Folgenden anhand der Figur erläutert, die einen Batteriedeckel mit einem erfindungsgemäßen Batterietrennschalter zeigt.

Gemäß der Figur ist ein Endpol 3 mit einem Kabel 9 mit einen Batterietrennschalter 9b verbunden, der das Lösen der Verbindung des Endpols 3 des Akkumulators zu einem elektrischen Netz unter Last verhindert. Für den Batterietrennschalter 9b ist vorzugsweise ein Montageraum in der Konstruktion des Deckels 1 vorgesehen. Insbesondere ist ein Batterietrennschalter 9b vorgesehen, der beispielsweise in einer Aussparung 1a im Deckel 1 durch Führungsrippen 1b positioniert ist. Der Batterietrennschalter 9b kann vorzugsweise durch Betätigen einer Polabdeckung 7 geschaltet werden, die am Deckel 1 gelenkig befestigt sein kann. Die Polabdeckung 7 weist insbesondere an der Unterseite einen angeformten Dom 8 zur Schalterbetätigung auf, der in eine Schaltöffnung 9c des Batterietrennschalters 9b eingreifen kann.

Es ist aber auch ein berührungsloser Mechanismus realisierbar, beispielsweise mit einem am Deckel befestigten Magneten und einem Reed-Relais im Batterietrennschalter 9b. Eine Arretierung der Polabdeckung 7 im geschlossenen Zustand kann über Schnapphaken 7a am Deckel 1 oder an der Polabdeckung 7 erfolgen. Ein Freischalten des Akkumulators kann aber auch durch Betätigung des Batterietrennschalters 9b über externe Sensoren von einem Bordnetzsteuergerät aus oder durch eine andere entfernt angeordnete Steuerung erfolgen. Die Sensoren können beispielsweise Temperatursensoren, Überstromsensoren oder Unfallsensoren sein. Von einem Bordnetzsteuergerät werden gemessene physikalische Größen ausgewertet; eine Freischaltung des Akkumulators erfolgt beispielsweise in Abhängigkeit vom Wert des Ladezustands (SOC, state of charge), vom Wert der Gebrauchstüchtigkeit (SOH, state of health) oder anderen abgeleiteten Größen.

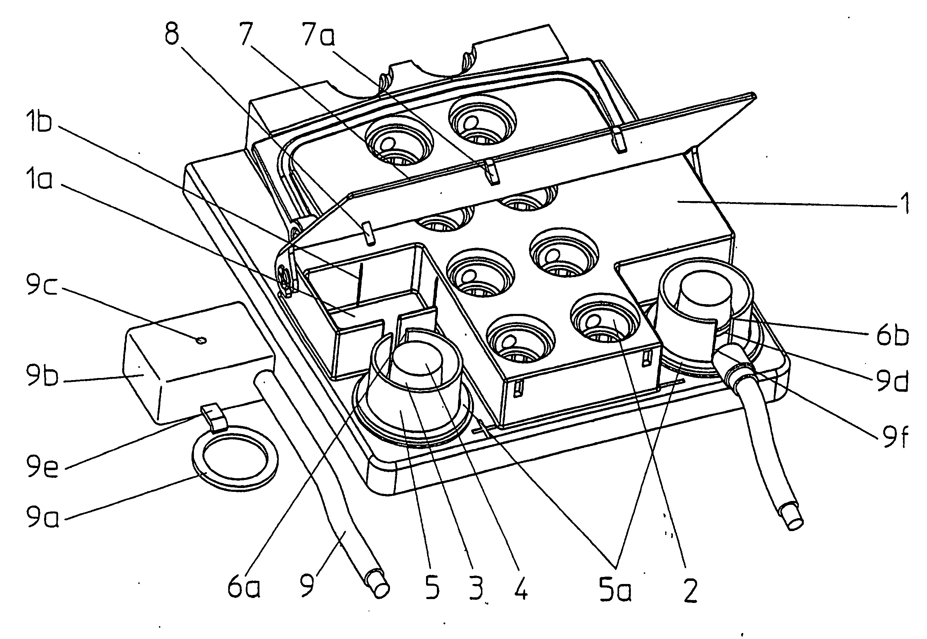

Die Endpole 3, mit denen die Kabel 9 verbunden sind, sind im Deckel 1, der auch die üblichen Einfüllöffnungen 2 enthält, angeordnet. Ein zylindrischer, frei drehbarer Kontaktschutz 5 in Form einer den Endpol 3 umgebenden Wandung schirmt den Endpol 3 derart an allen Seiten ab, dass der Endpol 3 nur von oben und über schmale, vertikale Schlitze 6a und 6b im umgebenden Kontaktschutz 5 aus Kunststoff zugänglich ist. Für den Kabelanschluss ist erfindungsgemäß eine ringförmige Kabellasche 9a oder 9d über den Endpol 3 geworfen, die während des Kontaktierungsvorganges erst nach Passieren der elektrisch isolierenden Polkappe 4 den Kontakt zum Endpol 3 ermöglicht. Die Befestigung der ringförmigen Kabellasche kann mit einer Schraubkappe erfolgen, die in der Gesamtansicht in Figur 1 nicht dargestellt ist.

Diese Schraubkappe besitzt ein innenliegendes Gewinde, insbesondere aus Metall, und wird auf den Endpol, der außen mit einer entsprechenden Gewindehülse versehen ist, aufgeschraubt.

Um ein Vertauschen der positiven und negativen Kabel 9 mit dem zugehörigen Endpol zu vermeiden, sind die Kabellaschen 9a und 9d mit für den positiven und negativen Kabelanschluss ungleich gewählten Breiten der Anschlüsse 9e und 9f versehen. Diese Breiten korrespondieren mit den ebenfalls ungleichen Breiten der Schlitze 6a und 6b des Kontaktschutzes 5.

Die Vertauschungssicherheit der Kabel 9 kann auch durch unterschiedliche Durchmesser der Endpole 3 erreicht werden, die mit unterschiedlich weiten Bohrungen der Kabellaschen 9a und 9d korrespondieren. Die größte Sicherheit wird erzielt, wenn beide Maßnahmen kombiniert werden und beispielsweise ein Endpol 3 mit geringerem Durchmesser mit einem schmalen Schlitz 6a oder 6b des Kontaktschutzes 5 sowie ein Endpol 3 mit einem größeren Durchmesser mit einem breiteren Schlitz 6a oder 6b des Kontaktschutzes 5 kombiniert werden.

Der Kontaktschutz 5 ist in einem am Deckel 1 vorgesehenen Befestigungsring 5a oder in am Deckel 1 angeformten Befestigungskrallen gehalten.

Außer mit der zuvor beschriebenen Klemmung einer Kabellasche 9a oder 9d ist der elektrische Anschluss auch durch eine Steckverbindung möglich. In dieser Variante kann das Außengewinde entfallen. Die elektrische Kontaktfläche des Endpols 3 kann vorteilhaft mit einer Strukturprägung der Oberfläche, beispielsweise durch umlaufende Nuten, versehen sein.

## Patentansprüche

1. Elektrischer Akkumulator mit in einem Gehäuse angeordneten positiven und negativen Elektroden mit zwischenliegenden Separatoren, einem Elektrolyten und mit mindestens einem Endpol (3) und daran angeschlossenen Kabel (9) wobei an das Kabel (9) ein Batterietrennschalter (9b) nichtlösbar angeformt ist, **dadurch gekennzeichnet, dass** der Batterietrennschatter (9b) bei Verbindung des Kabels (9) mit dem Endpol (3) im Deckel (1) des Akkumulators integriert und durch das Schließen und Öffnen einer am Deckel (1) angeordneten Polabdeckung (7) ansteuerbar ist.

2. Elektrischer Akkumulator nach Anspruch 1, **dadurch gekennzeichnet, dass** die Polabdeckung (7) gelenkig am Deckel (1) befestigt ist.

3. Elektrischer Akkumulator nach einem der vorhergehenden Ansprüche, **dadurch gekennzeichnet, dass** die Polabdeckung (7) oder der Deckel (1) mit Schnapphaken (7a) zur Arretierung versehen ist.

4. Elektrischer Akkumulator nach einem der vorhergehenden Ansprüche, **dadurch gekennzeichnet, dass** zur Ansteuerung des Batterietrennschalters (9b) ein hervorstehender Dorn (8) an der Unterseite der Polabdeckung (7) angeordnet ist.

5. Elektrischer Akkumulator nach einem der vorhergehenden Ansprüche, **dadurch gekennzeichnet, dass** der Batterietrennschalter (9b) über externe Sensoren, beispielsweise Temperatursensoren, Überstromsensoren oder Unfallsenoren, ansteuerbar ist.

6. Elektrischer Akkumulator nach einem der vorhergehenden Ansprüche, **dadurch gekennzeichnet, dass** der Kabelanschluss durch eine Kabellasche (9a, 9d) mit einem Endpol (3) verbunden ist, der mit einem zylinderförmigen frei drehbaren Kontaktschutz (5) umgeben ist, der einen nur von oben zugänglichen Schlitz (6a, 6b) besitzt.

7. Elektrischer Akkumulator nach einem der vorhergehenden Ansprüche, **dadurch gekennzeichnet, dass** der Kontaktschutz (5) mit am Deckel (1) angeformten Befestigungskrallen befestigt ist.

8. Elektrischer Akkumulator nach einem der vorhergehenden Ansprüche, **dadurch gekennzeichnet, dass** an der Kabellasche (9a, 9d) eine elektrisch isolierende Schraubkappe aus einem harten Kunststoffmaterial mit Gewinde unverlierbar angebracht ist, die auf den mit einer Gewindehülse versehenen Endpol (3) aufschraubbar ist.

9. Elektrischer Akkumulator nach einem der vorhergehenden Ansprüche, **dadurch gekennzeichnet, dass** der Kabelanschluss am positiven und am negativen Endpol durch unterschiedlich breite Schlitze (6a, 6b) im Kontaktschutz (5) und korrespondierend unterschiedlich breite Anschlüsse (9e, 9f) der Kabel (9) vertauschungssicher ausgestaltet ist.

## Claims

1. Electrical rechargeable battery having positive and negative electrodes which are arranged in a housing and have separators located between them, having an electrolyte and having at least one end pole (3) and cables (9) connected to it, with a battery disconnection switch (9b) being non-detachably integrally formed on the cable (9), **characterized in that** the battery disconnection switch (9b) is integrated in the cover (1) of the rechargeable battery when the cable (9) is connected to the end pole (3), and can be driven by closing and opening a pole cover (7) which is arranged on the cover (1).

2. Electrical rechargeable battery according to Claim 1, **characterized in that** the pole cover (7) is attached in a hinged manner to the cover (1).

3. Electrical rechargeable battery according to one of the preceding claims, **characterized in that** the pole cover (7) or the cover (1) is provided with snap-action hooks (7a) for locking.

4. Electrical rechargeable battery according to one of the preceding claims, **characterized in that** a projecting pin (8) is arranged on the lower face of the pole cover (7) for driving the battery disconnection switch (9b).

5. Electrical rechargeable battery according to one of the preceding claims, **characterized in that** the battery disconnection switch (9b) can be driven via external sensors, for example temperature sensors, overcurrent sensors or accident sensors.

6. Electrical rechargeable battery according to one of the preceding claims, **characterized in that** the cable connection is connected by means of a cable lug (9a, 9d) to an end pole (3) which is surrounded by cylindrical contact protection (5) which can rotate freely and has a slot (6a, 6b) which is accessible only from above.

7. Electrical rechargeable battery according to one of the preceding claims, **characterized in that** the contact protection (5) is attached by means of attachment claws, which are integrally formed on the cover (1).

8. Electrical rechargeable battery according to one of the preceding claims, **characterized in that** an electrically insulating screw cap composed of a hard plastic material with a thread is fitted in a captive manner to the cable lug (9a, 9d) and can be screwed on to the end pole (3) which is provided with a threaded sleeve.

9. Electrical rechargeable battery according to one of the preceding claims, **characterized in that** the cable connection is designed such that it cannot be connected incorrectly at the positive and at the negative end pole by means of slots (6a, 6b) of different width in the contact protection (5) and connections (9e, 9f) with a correspondingly different width on the cables (9).

## Revendications

1. Accumulateur électrique avec des électrodes positives et négatives disposées dans un boîtier avec des séparateurs intercalés, un électrolyte et au moins un pôle terminal (3) et un câble (9) connecté à celui-ci,
dans lequel un interrupteur de batterie (9b) est rapporté au câble (9) de façon inamovible,
**caractérisé en ce que**
lors de la liaison du câble (9) avec le pôle terminal (3) l'interrupteur de batterie (9b) est intégré dans le couvercle (1) de l'accumulateur et peut être commandé par la fermeture et l'ouverture d'une couverture de pôle (7) disposée sur le couvercle (1).

2. Accumulateur électrique selon la revendication 1,
**caractérisé en ce que**
la couverture de pôle (7) est fixée de manière articulée au couvercle (1).

3. Accumulateur électrique selon l'une quelconque des revendications précédentes,
**caractérisé en ce que**
la couverture de pôle (7) ou le couvercle (1) est muni de crochets à déclic (7a) pour le blocage.

4. Accumulateur électrique selon l'une quelconque des revendications précédentes,
**caractérisé en ce qu'**
une broche saillante (8) est disposée à la face inférieure de la couverture de pôle (7) pour commander l'interrupteur de batterie (9b).

5. Accumulateur électrique selon l'une quelconque des revendications précédentes,
**caractérisé en ce que**
l'interrupteur de batterie (9b) peut être commandé par des capteurs extérieurs, par exemple des capteurs de température, des capteurs de surintensité de courant ou des capteurs d'accident.

6. Accumulateur électrique selon l'une quelconque des revendications précédentes,
**caractérisé en ce que**
le raccord de câble est relié par une languette (9a, 9d) à un pôle terminal (3) entouré par une protection de contact (5) cylindrique en rotation libre présentant une fente (6a, 6b) qui n'est accessible que par le haut.

7. Accumulateur électrique selon l'une quelconque des revendications précédentes,
**caractérisé en ce que**
la protection de contact (5) est fixée par des griffes de fixation rapportées au couvercle (1).

8. Accumulateur électrique selon l'une quelconque des revendications précédentes,
**caractérisé en ce que**
la languette de câble (9a, 9d) est munie d'un capuchon imperdable à visser, électriquement isolant, en matière plastique dure présentant un filet pouvant être vissé sur le pôle terminal (3) pourvu d'une douille filetée.

9. Accumulateur électrique selon l'une quelconque des revendications précédentes,
**caractérisé en ce que**
le raccord de câble est configuré, de façon irréversible au niveau des pôles terminaux positif et négatif, grâce à des fentes (6a, 6b) d'une largeur différente dans la protection de contact (5) et des raccords (9e, 9f) de câbles (9) correspondants d'une largeur différente.
